Europäisches Patentamt

European Patent Office

Office européen des brevets

(11) Publication number: **0 082 317**
**B1**

(12) **EUROPEAN PATENT SPECIFICATION**

(45) Date of publication of patent specification: **26.03.86**

(21) Application number: **82110737.2**

(22) Date of filing: **20.11.82**

(51) Int. Cl.⁴: **G 21 C 19/06, G 21 C 19/40**

(54) **Storage rack for spent BWR fuel assemblies.**

(30) Priority: **22.12.81 US 333544**

(43) Date of publication of application:
**29.06.83 Bulletin 83/26**

(45) Publication of the grant of the patent:
**26.03.86 Bulletin 86/13**

(84) Designated Contracting States:
**BE CH DE FR IT LI SE**

(56) References cited:
**EP-A-0 023 742**
**EP-A-0 071 364**
**DE-A-2 700 520**
**FR-A-2 440 060**
**FR-A-2 455 339**
**US-A-4 034 227**
**US-A-4 088 897**
**US-A-4 342 620**

(73) Proprietor: **WESTINGHOUSE ELECTRIC
CORPORATION
Westinghouse Building Gateway Center
Pittsburgh Pennsylvania 15222 (US)**

(72) Inventor: **Machado, Octavio Jorge
4435 Roxborough Place
Pensacola Florida (US)**
Inventor: **Henry, Clifford W.
1224 Lake Avenue Apt. 315
Metaire Louisiana (US)**
Inventor: **Congleton, Ray LaVaughn
Route 5 Box 222
Cantonment Florida (US)**
Inventor: **Flynn, William Martin
685 Whitney Drive
Pensacola Florida (US)**

(74) Representative: **Holzer, Rupprecht, Dipl.-Ing.
Philippine-Welser-Strasse 14
D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to spent fuel storage racks and more particularly to an improved design of racks particularly adapted for storage of fuel assemblies of the type used in boiling water reactors.

Delays in the reprocessing of reactor spent fuel requires utilities to better utilize the spent fuel storage space at a reactor site. The delays also have provided the economic incentive to increase the storage capacity and thus better control the handling and disposition of spent fuel and costs associated therewith. Initially, plant designers typically included at the reactor site, a spent fuel pool sized to receive a number of spent fuel assemblies less than the total amount expected to be removed from the reactor during its lifetime. The fuel assemblies were located on centers or at a pitch such that space between assemblies together with the water surrounding each fuel assembly was sufficient to maintain the fuel in a non-critical condition. At this spacing, subcriticality was maintained by utilizing water only as a coolant. As the need for compact storage increased, the first stage of capacity expansion included the use of stainless steel cells for containing each fuel assembly thus permitting reduced spacing between fuel assemblies. This reduction increased the storage capacity by simply changing the design of storage racks without increasing the size of the storage pool. As decisions concerning reprocessing continue to be delayed, greater compaction of fuel assemblies into the allotted pool space is accomplished by applying neutron absorbing materials to the walls of the stainless steel containers or cells which were made to a size to just accept a fuel assembly. This design permits cells to be spaced on a pitch even less than previous rack designs thus increasing the storage capacity to the extent where the storage pool can accommodate about 10 years of spent fuel.

Such a spent fuel rack is described in FR—A—24 40 060 and comprises a base plate and a plurality of cells vertically mounted thereon. The cells are of square cross-section and formed by metal tubes each consisting of two L-shaped segments having their longitudinal edges welded together. The metal tubes are attached to each other along their edges so as to form a staggered arrangement of the tubes with tubular holes therebetween, the tubes and the tubular holes each forming one cell. The tubular holes have a larger cross-sectional area than the tubes so as to allow insertion of a tubular lining of neutron absorbing material into said tubular holes.

It is the principal object of the present invention to provide a spent fuel rack module which is capable of storing a relatively large amount of fuel assemblies within a given space and which, nevertheless, is relatively inexpensive to manufacture and which makes it possible to visually ensure that neutron absorbing material is properly positioned at the walls of the cells.

Accordingly, the present invention provides a spent fuel rack module as claimed in claim 1.

In a preferred embodiment, the base plate has leveling means located at each corner and positioned immediately beneath the base plate flow openings at the corners, and an adjusting mechanism is provided for said leveling means which is accessible through the respective flow openings in the base plate to adjust the level position of said plate.

The invention will become more readily apparent from the following description of a preferred embodiment thereof shown, by way of example only, in the accompanying drawings, wherein:

Figure 1 is a perspective view of a modular spent fuel rack of this invention;

Figure 2 is a front view in elevation of the spent fuel rack of Figure 1;

Figure 3 is a plan view of the spent fuel rack illustrated in Figures 1 and 2;

Figure 4 is a plan view of a portion of the modular structure shown in Figures 1 and 2 illustrating how the cells are formed and positioned prior to being structurally interconnected to arrive at the modular structure;

Figure 5 is a detailed view of the connecting arrangement used for joining two adjacent cells where the gap between cells is of optimum size;

Figure 6 is a view similar to Figure 5 but showing how the adjacent cells are welded together when the cells are closer than the optimum distance;

Figure 7 is a plan view of the upper right-hand corner of the module shown in Figure 3;

Figure 8 is a bottom view of a support plate arranged to be welded to the underside of the base plate which supports the module and includes an opening of desired configuration for lifting the base plate and moving it from one location to another;

Figure 9 is a view taken on lines IX—IX of Figure 8; and

Figure 10 is a view taken on lines X—X of Figure 7 illustrating the arrangement used for leveling the base plate and cells mounted thereon.

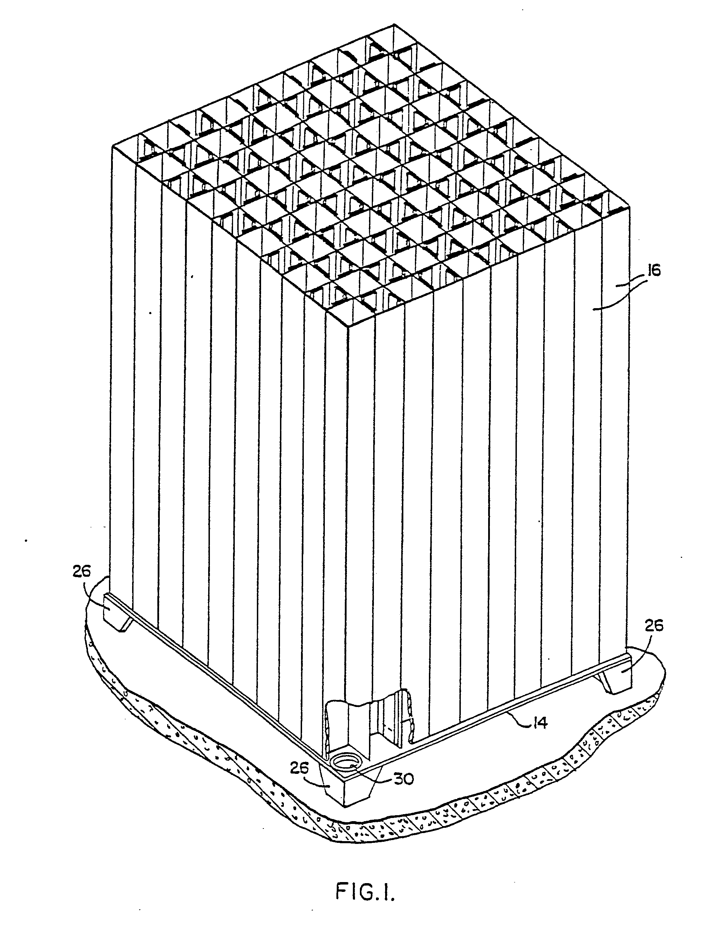

Referring now to the drawings wherein like reference characters designate like or corresponding parts throughout the several views, there is shown in Figures 1—3 a fuel rack of modular design particularly adapted to receive fuel assemblies of the type used in boiling water reactors. The module includes a 1.3 cm. base plate 14 designed to support multiple stainless steel containers or cells 16 each designed to hold a fuel assembly. Stability and rigidity is imparted to the modular unit by a base assembly and welds at the corners of each cell connecting all cells in a unitary structure. Adjustable leveling pads 26 located at the corners of the module and intermediate leveling pads 28 located at appropriate points beneath the base plate assures desired rigidity. Squareness and verticality in the module are also assured by leveling the base plate to a horizontal position.

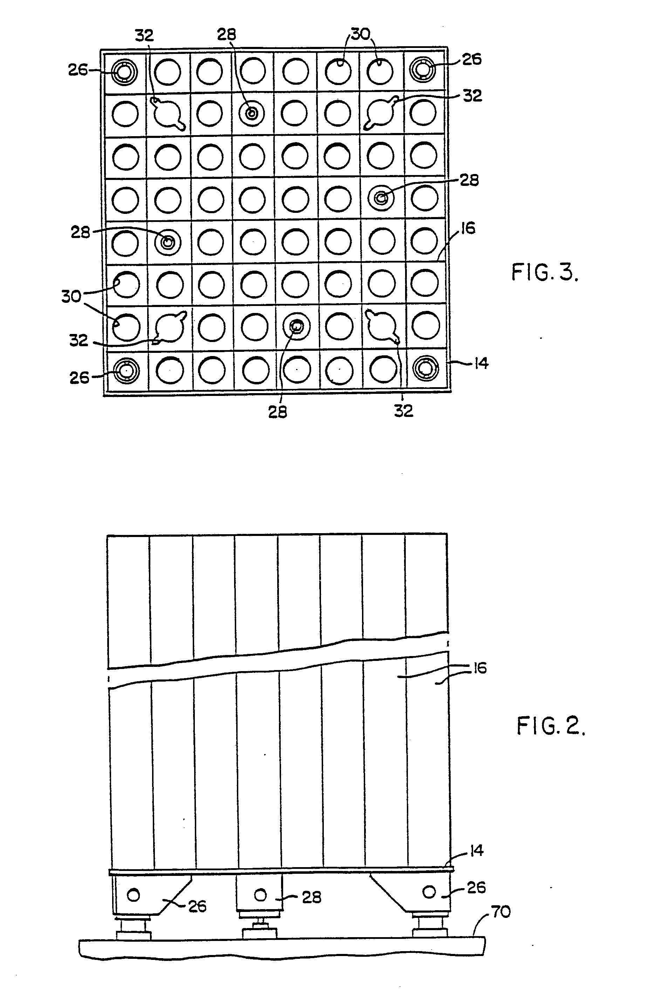

As more clearly shown in Figures 3, 7 and 10, the base plate 14 includes multiple openings 30 of a design and size compatible with the configuration of the bottom nozzle of a fuel assembly adapted to be placed in each cell. In addition to receiving and supporting the bottom end of a fuel assembly, openings 30 provide a natural circulation flow path upwardly to assure proper cooling of the stored fuel assemblies by water or other coolant medium. Openings 30 further provide access to the leveling pads 26 while the openings in the central part of plate 14 provide access to the interior leveling pads 28. As more fully described hereafter, other openings have cut-away sections 32 which are particularly designed to receive a lifting tool for lifting and transferring the plate and/or the module to different locations.

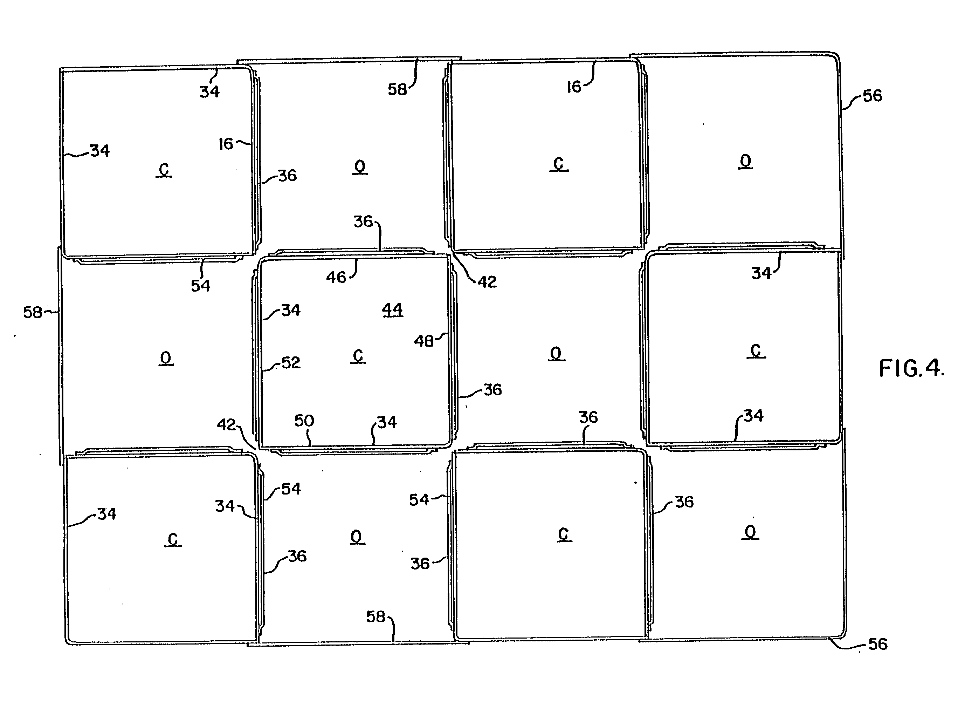

As illustrated in Figures 4—6, the spent fuel rack module is substantially different from prior art designs inasmuch as no space exists between adjacent cells. The cells 16 shown are manufactured from a number of L-shaped sections 34 of a length sufficient to extend higher than the height of a fuel assembly and of a length and width just slightly in excess of those dimensions of a fuel assembly. To impact strength and stability to the cells, the cell walls are made of 0.2 mm. stainless steel although cell walls of different thicknesses may be used depending on the design criteria for the particular application. Neutron absorbing material 36, more fully described hereafter, is attached along the length and on the outside cell wall surfaces to help preclude the transfer of neutrons from one fuel assembly to another located in adjacent cells. All of the cells in the fuel rack module except those on the fuel rack periphery have neutron absorbing material on all four sides.

Each inner cell is made up of two L-shaped sections 34, and to provide simplicity in the manufacturing operations, neutron absorbing material is attached to the outer side of the walls of both L-shaped sections. To form a complete cell, one of the two thusly formed manufacturing sections 34 is placed in contact with, or in substantial contact with the corresponding longitudinal edges on the other sections. When these abutting edges of the two L-shaped sections are joined together by welds 42, a complete cell is formed of a size sufficient to accept a fuel assembly. The cell is enclosed by neutron absorbing material 36 on all four walls and it is evident that the material on these walls serves the same function in absorbing neutrons from fuel assemblies in the adjacent cells. When the cells of a complete module are constructed in this manner, examination of Figure 4 will show that every alternate cell is formed by the L-shaped sections which surround it. Note for example that the cell designated 44 is formed by walls 46, 48, 50, and 52. Each of these walls alco comprise one wall of each cell which surround the cell 44. Cells which are thusly formed by the L-shaped walls are designated C and those cells which share the walls of the C cell are designated O.

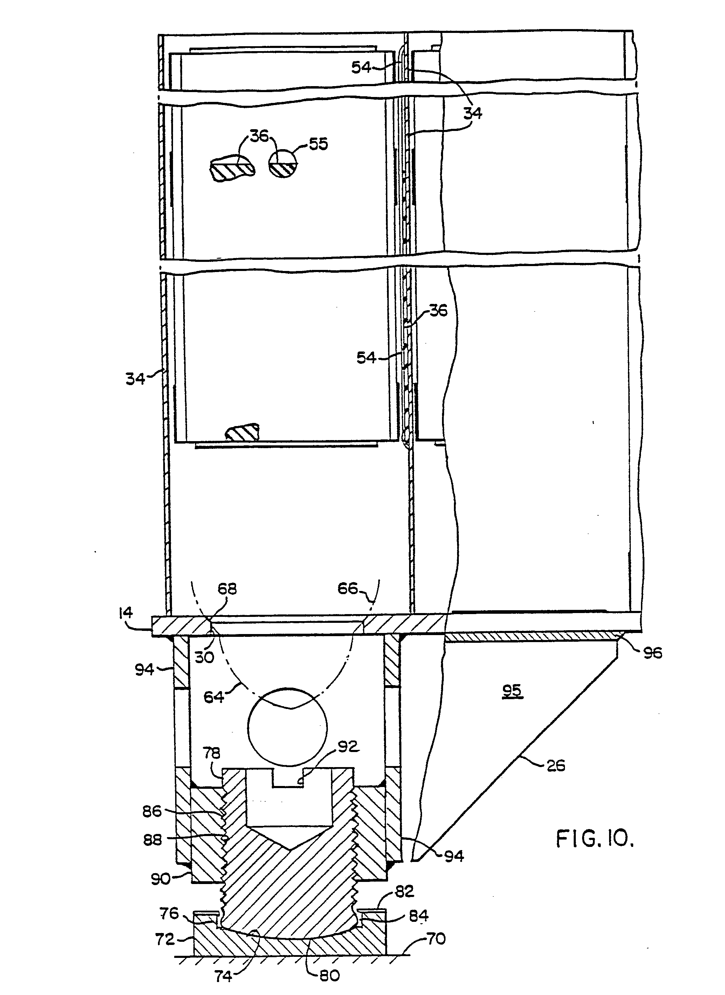

The neutron absorbing material 36 preferably comprises Boraflex which is an elastomeric silicone polymer matrix manufactured by Brand Industrial Services, Inc. of Parkridge, Illinois. Other neutron absorbing materials may be used if desired. The Boraflex is approximately 1.14 mm (.045 inch) thick and extends substantially the full length and width of the side wall on which it is mounted. A wrapper plate 54 of 0.89 mm (.035 inch) stainless steel protects the Boraflex against physical damage and is welded along the edges to the L section wall surfaces. The wrapper plate may terminate short of the end of each L-shaped section as shown in Figure 10, or extend to the complete end. An inspection hole 55, Figure 10, is used to visually verify proper placement of the neutron absorber material. Also, it will be noted that each alternate cell on the module periphery is closed by a panel 58, Figure 4, which extends the cell complete length.

To form a spent fuel rack, all the L-shaped sections are assembled into cells as described above, and with this construction, the interior of each cell, other than those cells located on the module periphery, is bounded by walls having neutron absorbing material located either on the inside or the outside walls of a particular cell. Since the corner cells of the module do not require neutron absorbing material on its outside walls, the L-shaped sections 56 located at the corners comprise only stainless steel plate having their longitudinal edges welded to adjacent L-shaped sections on the module. When thus welded, each corner cell is then of a size and configuration to accept a fuel assembly.

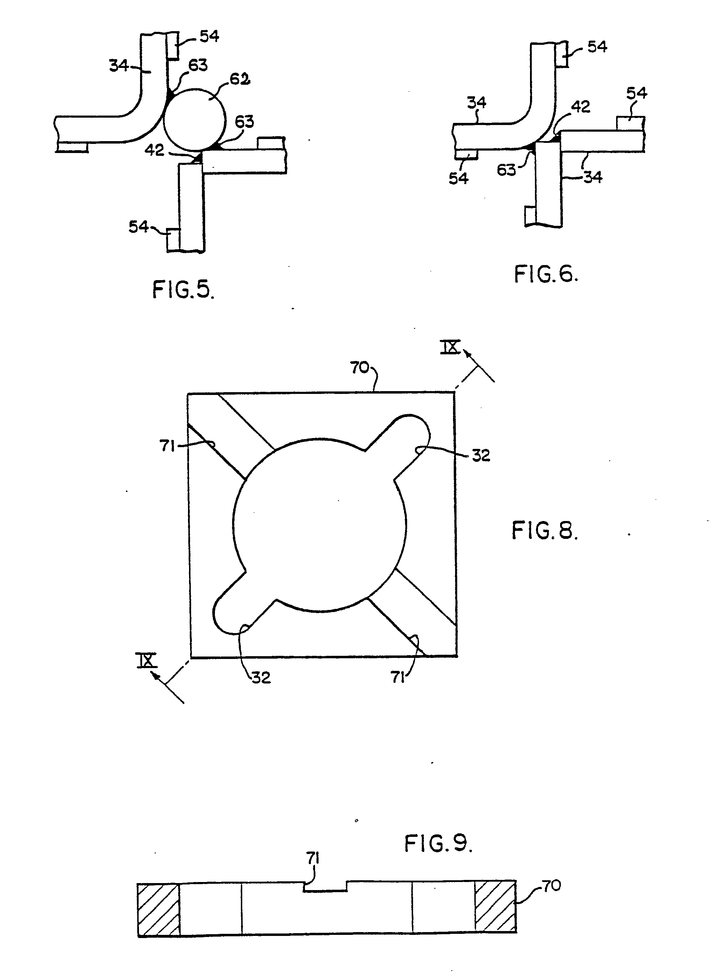

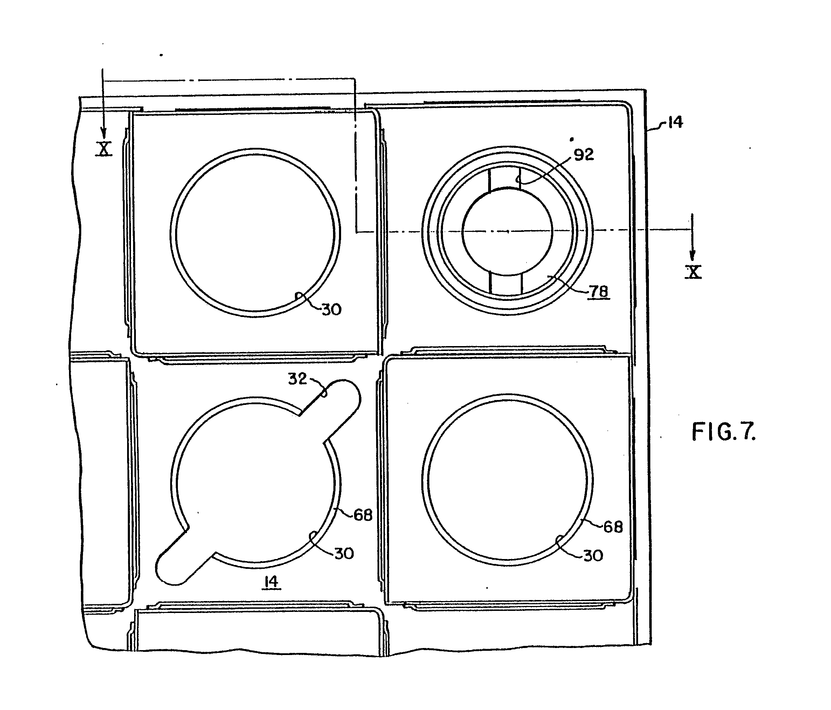

Figures 4—6 illustrate how the L-shaped sections are welded together to form cells. Variations in the characteristics of the stainless steel material after being exposed to varying temperatures and stresses during the manufacturing process, produces slight distortion in the material such that the L section longitudinal edges do not always fall in a vertical plane. Usually the longitudinal edges can be welded along their complete length as shown in Figures 5 and 6 wherein weld 42 metallurgically joins adjacent L-shaped sections 34. In the event the adjacent L sections to be welded are spaced a distance greater than that which can be bridged by a siingle weld, such as weld 42, 4.57 mm (0.18 inch) spacer wire 62 shown in Figure 5, is welded in the gap formed at the intersection of the L sections. Separate welds 63 are then made between each section and the wire spacer and along their complete height to provide stability to the fuel rack module. Since the space between adjacent sections may vary, it is evident that spacer wire, or other appropriate filler material, of different diameters or strips of different thicknesses and lengths may be welded to the adjacent L sections to hold the parts together.

The base plate 14 illustrated in Figures 3, 7 and 10 includes openings 30 which receive the bottom nozzle 64 of a fuel assembly adapted to be placed in the opening 30 provided in each cell 16. As shown in Figure 10, the plate opening 30 is of a size larger than the bottom nozzle 64 but smaller than an upper portion 66 thereof. The wall of opening 30 includes a bevel 68 complementary to the sides of the nozzle 64 which provides a surface area which supports a fuel assembly when positioned on the rack.

The openings 30 are further modified, Figures 3, 8 and 10, to permit access to lifting apparatus for transferring the base plate 14 alone, or the base plate plus the stainless steel cells, from one location to another. To accomplish this each of four openings 30 are provided with oppositely directed slots 32 of a size sufficient to accept lifting apparatus (not shown). The apparatus is of a length just sufficient to fit through slot 32 prior to being rotated 90° to a position for engagement with the underside of plate 14 for lifting purposes. To impart strength to the base plate 14 in the areas where the lifting apparatus will engage the plate, a 2.54 cm (one-inch) stainless steel block 70, Figure 9, having a lifting opening of the same design as slot 32 in the base plate 14, is welded to the underside of the base plate and at the four positions indicated in Figure 3. Depending on the size of base plate and module being lifted, either a greater or lesser number of openings may be provided for lifting purposes. The stainless steel block 70 includes a tool retaining slot 71. The slot is located in the manner shown to provide an impediment to rotation of the lifting apparatus after it is inserted through the slots 32 and rotated 90° to a plate lifting position. When the base plate is lifted, the retaining slot will prevent rotation of the lifting apparatus in the event it is jarred or vibrated during transfer of the base plate from one position to another.

The leveling apparatus beneath base plate 14 is similar to the design set forth in EP—A—71 364 inasmuch as the leveling pads are designed to conform to the slope of the pool floor and still achieve true squareness in the construction relative to vertical and horizontal axes. As illustrated in Figures 7 and 10, each corner leveling pad 26 is mounted on the pool floor 70 for leveling base plate 14. Pedestal 72 is mounted for free unrestricted movement on the pool floor. The pedestal includes an articulated surface 74 which merges into upstanding cylindrical walls 76. A leveling screw 78 having a spherical surface 80 formed on its bottom end is complementary to pedestal surface 74. After the end of leveling screw 78 is placed in the pedestal, a retaining plate 82 is welded to the pedestal 72 thus leaving a space 84 into which the end of the screw may move if necessary for leveling purposes. External threads 86 on the screw mesh with similar threads 88 on a support pad 90 so that when the screw is rotated by a tool in slot 92, the support pad 90 is caused to be moved vertically. The support pad 90 is welded to the inner surface of four plates 94 attached to the bottom of base plate 14. The radially spaced support arms 95 are attached to the underside of base plate 14 by welds 96.

In operation, to adjust base plate 14 to a level condition, leveling pads 26 are located beneath the base plate corners and at selected positions under the base plate central area. To level the base plate and cells thereon, each leveling screw 78 is moved in an amount and direction to have bottom surface of pedestal 72 tilt or conform to the slope and elevation of the floor on which pool liner 70 rests. If the liner floor is uneven, the complementary spherical surfaces on the pedestal and leveling screw are adjusted to each other until the axis of leveling screw 78 lies in a vertical plane. By inserting a tool in slot 92 and rotating the leveling screw, which then acts as a bearing, the support pad 90 will act through plates 94 to vertically move the base plate and thus raise or lower it to a desired position. This action is repeated for each corner and central area support pad until the base plate 14 is adjusted to the desired position.

It will be apparent that many modifications and variations are possible in light of the above teachings. It therefore is to be understood that within the scope of the appended claims, the invention may be practiced other than as specifically described.

**Claims**

1. A fuel rack module for storing nuclear fuel assemblies in a storage pool, comprising a base plate (14) and a plurality of cells (16) vertically mounted thereon, each of that cells (16) being of square cross-section and having assocciated therewith a coolant flow opening (30) formed in the base plate (14), said cells (16) being formed of pairs of L-shaped segments (34) having their longitudinal edges welded together and the corner of adjacent cells (16) being attached to each other along their length so as to provide a module such that the walls of each cell except for the outer wall of the peripheral row of cells in the module are common with adjacent cells (16) in the module, and neutron absorbing material (36) being provided at the walls of said cells (16), characterized in that the neutron absorbing material (36) is mounted on each wall of each L-shaped segment (34) except those walls located on the module periphery, the neutron absorbing material (36) being held on each said wall by a wrapper plate (54) overlaying said absorbing material (36) and welded to said wall, and that each cell (30) contains at least one inspection hole (55) in a cell wall so arranged as to permit verification of proper location of the neutron absorbing material (36) on the cell wall.

2. A fuel rack module according to claim 1, characterized in that said base plate (14) has leveling means (26) located at each corner, said leveling means (26) being positioned immediately beneath said coolant flow opening (30) at the corner of the base plate, and an adjusting mechanism (72 to 92) being provided for said leveling means (26) which is accessible through the flow opening (30) in the base plate (14) to adjust the level position of said base plate (14).

**Patentansprüche**

1. Brennstoffgestellmodul zur Lagerung von Kernbrennelementen in einem Lagerbecken, mit einer Grundplatte (14) und einer Vielzahl von darauf vertikal montierten Zellen (16), wobei jede dieser Zellen (16) einen quadratischen Querschnitt hat und ihr eine in der Grundplatte (14) gebildete Kühlmitteldurchtrittsöffnung (30) zugeordnet ist, wobei weiter die Zellen (16) aus Paaren von mit ihren Längskanten miteinander verschweißten L-förmigen Bauteilen (34) gebildet und die Ecken benachbarter Zellen (16) entlang ihrer Länge jeweils aneinander befestigt sind, so daß ein Modul derart gebildet ist, daß die Wände jeder Zelle mit Ausnahme der Außenwand der äußeren Zellenreihe des Moduls den jeweils benachbarten Zellen (16) in dem Modul gemeinsam zugehören, und wobei an den Wänden der Zellen (16) neutronenabsorbierendes Material (36) angeordnet ist, dadurch gekennzeichnet, daß das neutronenabsorbierende Material (36) auf jeder Wand jedes L-förmigen Bauteils (34) mit Ausnahme der am Modulumfang gelegenen Wände montiert ist, daß weiter das neutronenabsorbierende Material (36) mittels einer Hüllplatte (54), die das absorbierende Material (36) überdeckt und an der Wand angeschweißt ist, an der jeweiligen Wand gehalten wird, und daß jede Zelle (30) mindestens eine Inspektionsöffnung (55) in einer Zellenwand aufweist, die so angeordnet ist, daß sie eine Prüfung der richtigen Anordnung des neutronenabsorbierenden Materials (36) auf der Zellenwand erlaubt. ·

2. Brennstoffgestellmodul nach Anspruch 1, dadurch gekennzeichnet, daß die Grundplatte (14) an jeder Ecke angeordnete Nivelliermittel (26) aufweist, das weiter diese Nivelliermittel (26) unmittelbar unterhalb der Kühlmitteldurchtrittsöffnung (30) an der Ecke der Grundplatte positioniert sind, und daß ein Einstellmechanismus (72—92) für die Nivelliermittel (26) vorgesehen ist, der durch die Durchtrittsöffnung (30) in der Grundplatte (14) hindurch zugänglich ist, um das Niveau der Grundplatte (14) zu justieren.

**Revendications**

1. Râtelier modulaire pour le stockage d'assemblages combustibles nucléaires usés dans une piscine de stockage, comprenant une plaque de base (14) et un certain nombre de cellules (16) montées verticalement sur cette dernière, chaque cellule (16) étant de section carrée, et une ouverture (30) d'écoulement de réfrigérant formée dans la plaque de base (14) étant associée à chaque cellule (16), les cellules (16) étant constituées de paires de segments (34) en forme de L dont les arêtes longitudinales sont soudées entre elles, et les coins des cellules (16) adjacentes étant fixés entre eux sur leur longueur de manière à fournir un module tel que les parois de chaque cellule formée dans le module, à l'exception de la paroi extérieure de la série périphérique de cellules, sont communes avec les cellules adjacentes (16) du module, et une matière (36) capable d'absorber les neutrons étant présente sur les parois des cellules (16), caractérisé par le fait que la matière (36) absorbant les neutrons est montée sur chaque paroi de chaque segment (34) en forme de L, à l'exception des parois situées sur la périphérie du module, la matière (36) absorbant les neutrons étant maintenue sur chacune desdites parois par une plaque de recouvrement (54) recouvrant ladite matière (36) absorbant les neutrons et soudée à ladite paroi, et que chaque cellule (16) comporte au moins un orifice d'inspection (55) pratiqué dans une paroi de la cellule et disposé de manière à permettre de vérifier que la matière (36) absorbant les neutrons est correctement positionnée sur la paroi de la cellule.

2. Râtelier de stockage selon la revendication 1, caractérisé par le fait que la plaque de base (14) est dotée de moyens de mise de niveau (26) situés à chaque coin, les moyens de mise de niveau (26) étant positionnés immédiatement en dessous des ouvertures (30) d'écoulement de réfrigérant situées aux coins de la plaque de base, et qu'il est prévu, afin d'ajuster la position de mise de niveau de la plaque de base (14), un mécanisme (72 à 92) d'ajustement des moyens de mise de niveau (26), mécanisme qui est accessible par les ouvertures d'écoulement (30) pratiquées dans la plaque de base (14).

FIG. I.

FIG. 3.

FIG. 2.

FIG.4.

FIG.5.

FIG.6.

FIG.8.

FIG.9.

0 082 317

FIG.7.

5

FIG. 10.